# EUROPEAN PATENT APPLICATION

(11) **EP 4 759 484 A1**
(43) Date of publication of application: **17.06.2026**
(21) Application number: 24219219.3
(22) Date of filing: 11.12.2024
(51) Int. Cl.: B25B 27/10

(54) **A PORTABLE ELECTRIC PRESSING TOOL**

(71) Applicant: Black & Decker, Inc., New Britain, CT 06053 (US)
(72) Inventor: KADLECEK, Daniel, 65510 Idstein (DE); SCHMIDT, Benjamin, 55122 Mainz (DE); STEIN, Thaddaeus, 65510 Idstein (DE); HEEP, Tobias, 65589 Steinbach (DE); KRISCHE, Fridtjof, 55122 Mainz (DE)
(74) Representative: SBD IPAdmin

(57) **Abstract**

A portable electric pressing tool comprising: an electric motor; a pressing mechanism having a pair of jaws and a driver wherein the pressing mechanism is operatively coupled to the electric motor for causing axial displacement of the driver between a home position and an active position for actuating the jaws; a home position sensor for generating output indicative that the driver has reached the home position during a reset stage of operation in which the driver is moved towards the home position; and a controller for receiving motor turn information indicative of the number of turns of the electric motor and for controlling axial movement of the driver in use based only on the motor turn information and the output generated by the home position sensor.

## Description

### Field

The present disclosure relates to a portable electric pressing tool.

### Background

Polymer tubing is often used in construction as an alternative to copper pipes which are more expensive. Such polymer tubing is attached to fittings using a crimped connector which is compressed into fixed engagement with the polymer tubing using a pressing tool, which may be a portable electric pressing tool. It is known to rely on sensors to determine the position of movable internal components within tools. However, depending on multiple sensors to monitor the position of a specific internal component increases risk of tool failure because the likelihood of sensor failure increases with the number of sensors used.

### Summary

According to the present disclosure there is provided a portable electric pressing tool according to claim 1 wherein optional features thereof are defined in the dependent claims.

### Brief Description of the Drawings

Various other aspects and further examples are also described in the following detailed description and in the attached claims with reference to the accompanying drawings, in which:
Fig. 1 is a side view of a portable electric pressing tool having a pressing mechanism;
Fig. 2 is a cross-sectional side view of the portable electric pressing tool in Fig. 1 with the pressing mechanism in a home position;
Fig. 3 is a cross-sectional side view of the portable electric pressing tool in Fig. 1 with the pressing mechanism in an active position;
Fig. 4 is a cross-sectional view looking down through the portable electric pressing tool in Fig. 2 through the axis B-B; and
Fig. 5 is a cross-sectional view looking right through the portable electric pressing tool in Fig. 2 through the axis A-A.
Fig. 6a shows an exploded view of a component of the portable electric pressing tool in Fig. 3;
Fig. 6b shows the component in Fig. 6a in assembled form;
Fig. 7 shows a schematic drawing of the portable electric pressing tool in Fig. 3;
Fig. 8 shows a flow diagram showing the operation of the portable electric pressing tool in Fig. 3 according to a first example;
Fig. 9 shows a flow diagram showing the operation of the portable electric pressing tool in Fig. 3 according to a second example; and
Fig. 10 shows a graph of motor speed versus time of the portable electric pressing tool in use.

### Detailed Description

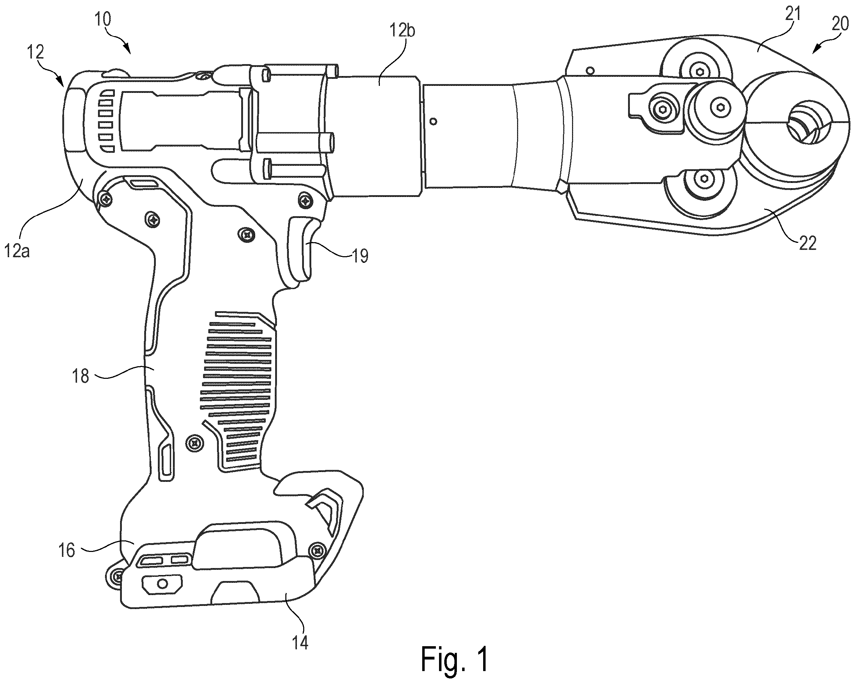

Fig. 1 shows a side view of a portable electric pressing tool 10. The portable electric pressing tool 10 has a housing 12 made of first and second housing parts 12a, 12b. The first housing part 12a is a plastic clam shell type housing part which defines the tool handle 18. The second housing part 12b is formed of metal and is partially surrounded by the first housing part 12a. A battery 14 is releasably connected to a base 16 of the handle 18 via a battery attachment portion. A trigger 19 is also provided.

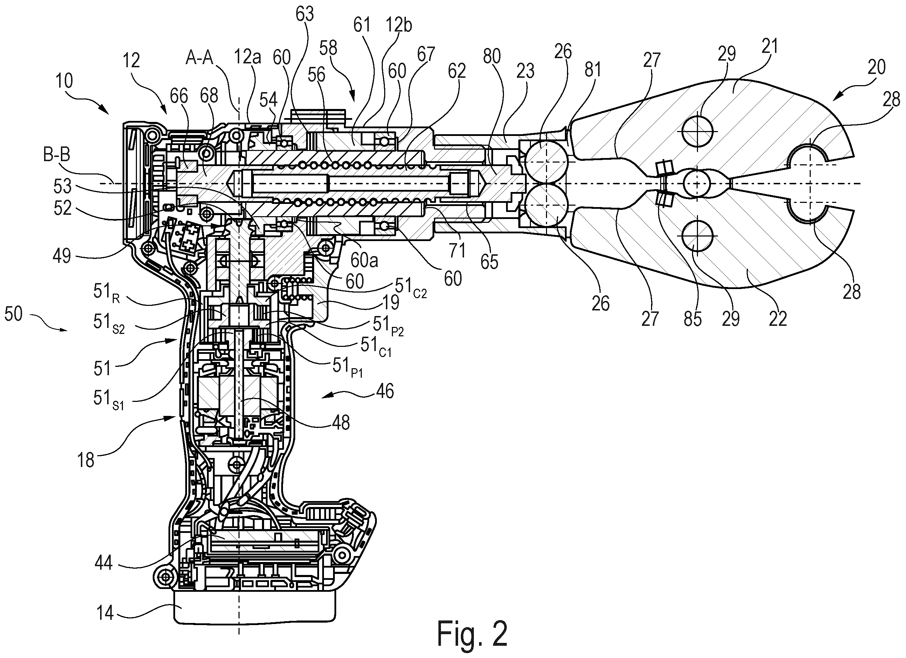

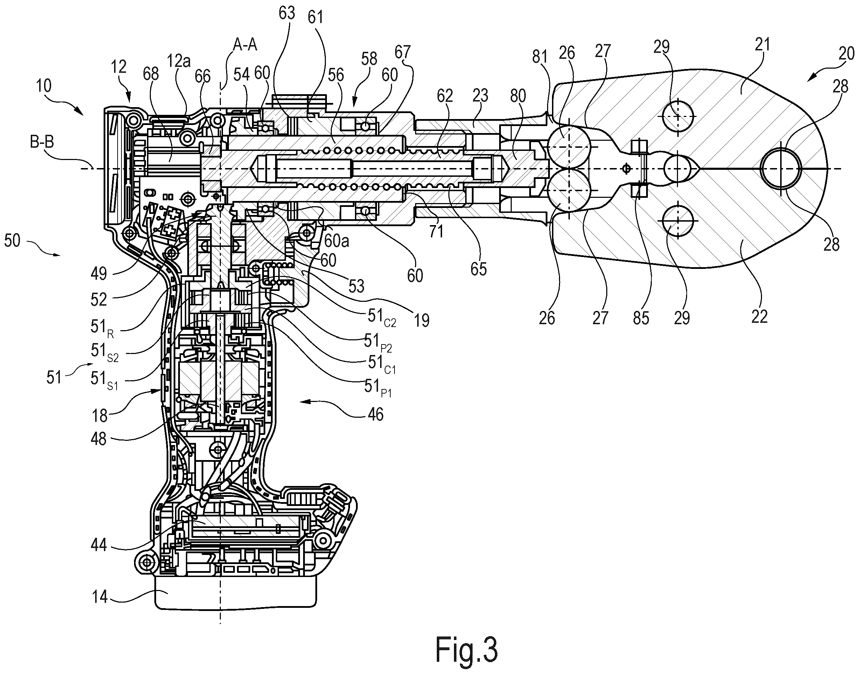

The portable electric pressing tool 10 has an electric motor 46 located within the handle 18 whereby a user's hand surrounds the motor 46 when gripping the handle 18. The electric motor 46 has a motor output shaft 48 which extends along a first longitudinal axis A-A (best shown in Figs 2 and 3) along the length of the handle 18.

The portable electric pressing tool 10 has a pressing mechanism 20 which is mounted to the second housing part 12b in a manner described later. The pressing mechanism 20 has a pair of jaws 21, 22 which are operatively coupled to the motor output shaft 48 via a transmission 50 for causing the jaws 21, 22 to selectively open and close. In the embodiment shown in the drawings the jaws 21, 22 are configured for compressing objects like connectors onto a portion of polymer tubing. Figs. 2 and 3 show the jaws 21, 22 in open and closed configurations respectively.

The transmission 50 causes torque from the electric motor 46 to be converted into linear force for causing the jaws 21, 22 to selectively move relative to each other between open and closed configurations. As will be described in more detail, the transmission 50 has a planetary gear arrangement 51, a bevel gear arrangement 49 and a conversion mechanism 58 whereby torque output from the electric motor 46 flows along the first axis A-A through the planetary gear arrangement 51 into the bevel gear arrangement 49 which redirects the flow of torque substantially 90 degrees so that torque flowing out of the bevel gear arrangement 49 flows along a second axis B-B into the conversion mechanism 58, wherein the conversion mechanism 58 converts torque into linear force for actuating the jaws 21, 22 of the pressing mechanism 20.

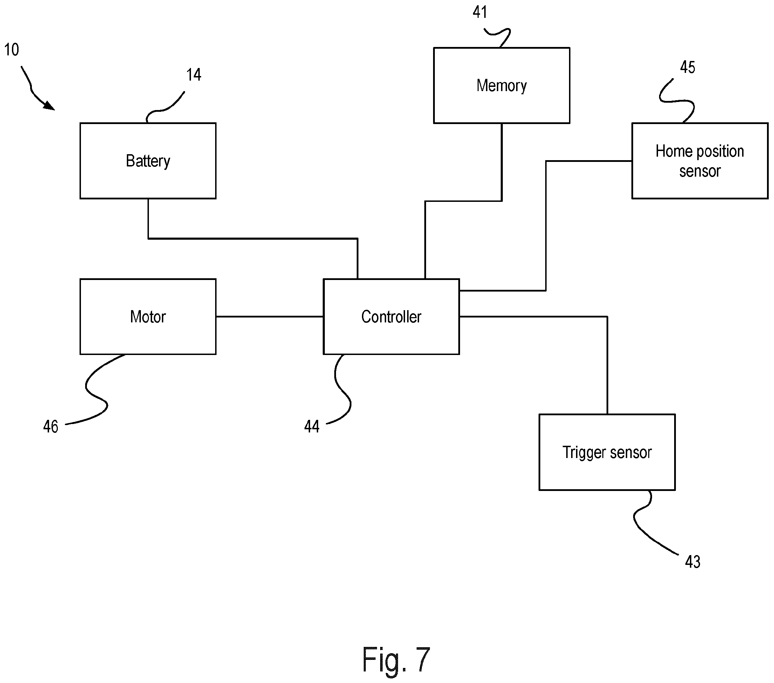

Referring to Figs. 2 to 4, the portable electric pressing tool 10 has a controller 44 for determining that the trigger 19 has been pulled. In response to the controller 44 determining that the trigger 19 has been pulled, the controller 44 generates a signal to activate the electric motor 46, which is a DC brushless motor such as the BL41 DC brushless motor designed by Stanley Black & Decker Inc. and used in some commercially available DEWALT^{®} branded power tools. The controller 44 is described in more detail below with respect to Fig. 7.

The motor 46 is powered by battery 14. The battery 14 is releasably connected to the base 16 of the handle 18 via the battery attachment portion arranged on the handle 18. The battery attachment portion is arranged so that a notional line extending between the battery attachment portion and the motor output shaft 48 extends along the first longitudinal axis A-A.

Torque from the motor output shaft 48 is transferred via the planetary gear arrangement 51 to an input pinion 52 of the bevel gear arrangement 49. The planetary gear arrangement 51 is configured to reduce output speed while increasing torque. The planetary gear arrangement 51 is located within the handle 18 of the portable electric pressing tool 10. The motor output shaft 48 drives an input sun gear 51_{S1} of the first stage of the planetary gear arrangement 51. The input sun gear 51_{S1} meshes with a plurality of first stage planet gears 51_{P1} which mesh with a stationary outer ring gear 51_{R} and are coupled to a first stage carrier 51_{C1}. An axial extension of the first stage carrier 51_{C1} is the input sun gear 51_{S2} of the second stage of the planetary gear arrangement 51. The input sun gear 51_{S2} meshes with a plurality of second stage planet gears 51_{P2} which mesh with the stationary outer ring gear 51_{R} and are coupled to a second stage carrier 51_{C2}. An axial extension of the second stage carrier 51_{C2} is rotationally fixed to the input pinion 52 of the bevel gear arrangement 49. The input pinion 52 of the bevel gear arrangement 49 thus rotates at a lower speed than the motor output shaft 48 however with an increased torque relative to the motor output shaft 48.

By locating the motor output shaft 48 of the electric motor 46, the planetary gear arrangement 51, the input pinion 52 of the bevel gear arrangement 49 and the battery attachment portion on the first longitudinal axis A-A extending along the longitudinal length of the handle 18, weight distribution of internal features of the portable electric pressing tool 10 is improved so the portable electric pressing tool 10 feels balanced in a user's hand. Also, by providing the electric motor 46 and planetary gear arrangement 51 within the handle 18, this leaves more space available within the housing 12 above the handle 18 which means there is more freedom to position internal features of the portable electric pressing tool 10 in positions which improve overall weight distribution of the portable electric pressing tool 10 while maintaining functionality.

It will be appreciated that there is some design freedom in the transmission 50 between the motor output shaft 48 and the input pinion 52 of the bevel gear arrangement 49. In particular the number of planetary gear stages, and its (or their) configuration, forming the transmission 50 depends on the required gear ratio to be achieved between the motor output shaft 48 and the input pinion 52.

Given that it is well known that planetary gear stages step down rotation speed while stepping up torque persons skilled in the art, based on the disclosure given herein, will be able to decide upon a suitable transmission 50 arrangement which achieves the required gear ratio for their tool to function; wherein the appropriate gear ratio depends on multiple factors including maximum achievable motor output torque, pitch of the ball screw arrangement described below, friction between moveable features within the portable electric pressing tool 10 and the maximum permissible pressing force. It will be appreciated that for some portable electric pressing tools 10 a suitable transmission 50 may only have a single planetary gear stage, whereas for other tools a suitable transmission 50 may have a plurality of planetary gear stages arranged in series.

Continuing with reference to Figs. 2 to 4 the bevel gear arrangement 49 has a bevel gear 53 meshed with the input pinion 52 for receiving torque therefrom. An axial extension of the bevel gear 53, hereafter the driving sleeve 54, is rotationally fixed relative to an input sleeve 56 of a ball screw mechanism 58. The driving sleeve 54 and input sleeve 56 are fixed relative to each other due to a friction fit arrangement. An internal surface of the input sleeve 56 comprises a threaded surface. The outer surface of the input sleeve 56 is supported by bearings 60 which enable rotation of the input sleeve 56 with respect to the housing 12. End surfaces of the input sleeve 56 are supported by axial bearings to enable rotation while providing axial support such as the axial bearing 71 in Figs. 2 to 4.

In a radial direction the bearings 60 are located between the input sleeve 56 and the inner surface of the second housing part 12b. In an axial direction the left-side bearings 60 in the drawings are arranged as follows: one side of the inner race of such bearings 60 engages the driving sleeve 54 whereas the other side of the inner race engages an axial bearing 60a received in a step shaped portion of the inner wall of the second housing part 12b and the outer race engages the inner wall of the second housing part 12b. Now considering the right-side bearings 60 in the drawings in an axial direction these are arranged as follows: one side of the inner race of such bearings 60 engages a bearing engagement sleeve 61 which is rotatably fixed to the input sleeve 56 via a friction fit and the other side of the inner race engages an axial bearing 67 received in a step shaped portion of the inner wall of the second housing part 12b, whereas the outer race engages the inner wall of the second housing part 12b. The opposite side of bearing engagement sleeve 61 engages an axial bearing 63 and indeed lips around the outer edge of the axial bearing 63 for preventing the axial bearing 63 from touching the inner side of the second housing part 12b.

A threaded rod 62 is mounted within the input sleeve 56, which extends through the input sleeve 56. A plurality of balls, such as metal ball bearings, ride in the opposing threaded surfaces of the input sleeve 56 and threaded rod 62, thereby defining the ball screw mechanism 58.

When the input sleeve 56 is rotatably driven by the driving sleeve 54 this causes axial movement of the threaded rod 62. In other words, torque from the electric motor 46 is transferred through the planetary gear arrangement 51, through the bevel gear arrangement 49 to the input sleeve 56, whereby rotation thereof causes axial movement of the threaded rod 62. The threaded rod 62 is configured to move along the second longitudinal axis B-B of the portable electric pressing tool 10. The threaded rod 62 can move forwards or backwards along the axis B-B depending on the motor driving direction for causing the jaws 21, 22 to selectively open and close.

A volume 68 (see Fig. 3) is provided within the housing 12 for accommodating the threaded rod 62 when retracted into the portable electric pressing tool 10.

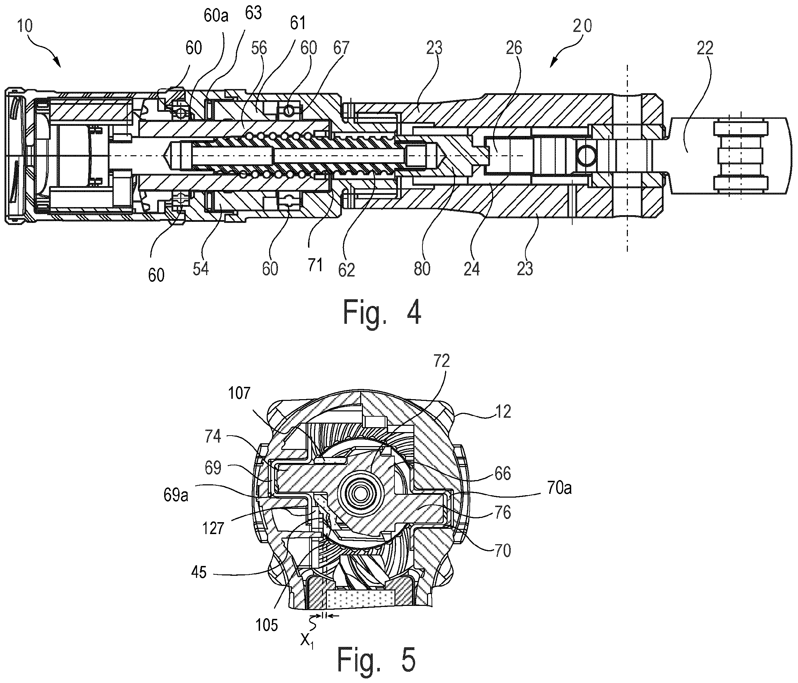

Fig. 5 shows that an anti-rotation bar 66 is engaged with the threaded rod 62 in a manner whereby the anti-rotation bar 66 is axially and rotationally fixed to the threaded rod 62. As the input sleeve 56 is rotated the anti-rotation bar 66 cooperates with the threaded rod 62 and the first and second slots 69, 70 within the housing 12 (more specifically with metallic liner plates 69a, 70a in the first and second slots 69, 70 to facilitate sliding and minimise wear) for causing the threaded rod 62 to move axially along the second longitudinal axis B-B. The anti-rotation bar 66 is rotationally fixed with respect to the housing 12 so it slides relative to the housing 12 on the metallic liner plates 69a, 70a through the first and second slots 69, 70 during axial movement of the threaded rod 62.

The anti-rotation bar 66 comprises a central hole 72 with a threaded inner surface which is tightly threadably engaged with a reciprocal threaded portion at an end of the threaded rod 62 as shown in Figs. 2 and 3. The threaded rod 62 extends through an opening 65 defined by the second housing part 12b and is coupled to the pressing mechanism 20. Figs. 2 to 4 show that the aforementioned axial bearing 71 additionally supports the threaded rod 62.

As already mentioned, the portable electric pressing tool 10 has a pressing mechanism 20 which is mounted to the second housing part 12b. A first metal housing part 23 of the pressing mechanism 20 has an internally threaded opening which is threadably engaged with an externally threaded portion of the second housing part 12b which defines the opening 65 for securing the pressing mechanism 20 in place. On an opposite side of the first metal housing part 23 is provided another internally threaded opening which is threadably engaged with an externally threaded portion of a second metal housing part 81 of the pressing mechanism 20.

The second metal housing part 81 of the pressing mechanism 20 is what the jaws 21, 22 are pivotally attached to. A pin 29 extends through each of the jaws 21, 22 for separately pivotally mounting the jaws 21, 22 to the second metal housing part 81. It will be appreciated that the pins 29 extend along an axis perpendicular to the aforementioned second longitudinal axis B-B. How the jaws 21, 22 are selectively actuated will now be explained. Namely, the second metal housing part 81 of the pressing mechanism 20 defines a space within which a driver 80 of the pressing mechanism 20 can be moved back and forth for physically actuating the jaws 21, 22.

The driver 80 of the pressing mechanism 20 is fixed to the threaded rod 62 such as by threaded engagement between such components whereby axial movement of the threaded rod 62 causes corresponding axial movement of the driver 80. The driver 80 comprises a pair of rollers 26 each having an axis of rotation perpendicular to the second longitudinal axis B-B along which the threaded rod 62 moves in use. More specifically, the rollers 26 are axially fixed relative to the threaded rod 62 but can nevertheless rotate. As such axial movement of the threaded rod 62 causes corresponding axial movement of the rollers 26 in a direction parallel to the second longitudinal axis B-B.

In use when the threaded rod 62 is caused to move towards the jaws 21, 22 the rollers 26 are urged against inner surfaces on the left-side of the jaws 21, 22 in Figs. 2 and 3 which causes the jaws 21, 22 to pivot about the pins 29 and for the right-side of the jaws 21, 22 to be urged together.

In other words, the jaws 21, 22 each comprise a distal portion comprising a pressing surface 28 and a proximal portion comprising a cam surface 27, wherein the distal portion and the proximal portion of each jaw 21, 22 are located on opposite sides of the jaw's pin 29.

In an open configuration of the pressing mechanism 20 as shown in Fig. 2, the distal portions of the jaws 21, 22 provided with the pressing surfaces 28 are spaced apart. The driver 80 as shown in Fig.2 is retracted into the portable electrical pressing tool 10 and the driver 80 is in a home position. In a closed configuration of the pressing mechanism 20 as shown in Fig. 3, the distal portions of the jaws 21, 22 provided with the pressing surfaces 28 are pressed towards each other wherein an object placed between the pressing surfaces 28 can be pressed e.g. a crimping ring can be crimped. The driver 80 as shown in Fig. 3 has moved axially out of the portable electrical pressing tool 10 in a direction parallel with the second longitudinal axis B-B and the driver 80 is in an active position. When the driver 80 is in the active position, the jaws 21, 22 are in a closed position and can exert a pressing force on an object.

The jaws 21, 22 are biased to the open configuration by a biasing member 85 such as a spring positioned between the jaws 21, 22. The biasing member 85 is coupled to inner portions of the cam surfaces 27 thereby biasing the jaws 21, 22 towards the open configuration. While the threaded rod 62 is being retracted after a pressing operation and the rollers 26 are caused to gradually move in a direction away from the jaws 21, 22, the biasing member 85 causes the jaws 21, 22 to progressively open wherein the portable electric pressing tool 10 can easily be used again by placing the open jaws 21, 22 around another object to be pressed.

As mentioned previously, the portable electric pressing tool 10 comprises a controller 44 to control operation of the motor 46 in use to implement a pressing operation. Upon pulling the trigger 19 the controller 44 initiates the electric motor 46 for causing the rollers 26 of the driver 80 to be urged against the cam surfaces 27 of the jaws 21, 22 for causing a pressing operation. Upon releasing the trigger 19 the controller 44 causes the electric motor 46 to rotate in the opposite direction for causing the rollers 26 of the driver 80 to be moved in a direction away from the jaws 21, 22 and for returning the portable electric pressing tool 10 to a home configuration which it occupied before the trigger 19 was initially pulled. As mentioned above, when the portable electric pressing tool 10 is in the home configuration, the driver 80 is in the home position.

The controller 44 will be discussed in more detail with reference to Fig. 7 which shows a schematic diagram of the portable electric pressing tool 10. The controller 44 is connected to the motor 46 and the battery 14. The controller 44 is configured to selectively control the motor 46 based on an actuation signal received from a trigger sensor 43 which is configured to generate a signal indicative that the trigger 19 has been pulled or released and a home position sensor 45.

The controller 44 is configured to determine the position of the driver 80 based on motor turn information indicative of the number of turns (or partial turns) the motor 46 has made since initiation of the current pressing operation when the driver 80 was in the home position. The motor turn information is indicative of the number of turns that the electric motor 46 has performed which corresponds to the axial position of the driver 80. In this way, the motor turn information is indicative of the position of the driver 80 and thus the jaws 21, 22 during the pressing operation. This provides that a clutch mechanism is not needed for protecting components of the portable electric pressing tool 10 if the driver 80 overshoots its intended maximum range of movement during tool use. The portable electric pressing tool 10 can determine the absolute position of the driver 80 with respect to a fixed part of the portable electric pressing tool 10 e.g. the first metal housing part 23 of the pressing mechanism 20, and thus the extent of actuation of the pressing mechanism 20.

The home position sensor 45 is configured to generate a signal indicative that the driver 80 is at the home position, which is the position in which the portable electric pressing tool 10 is ready to begin a new pressing operation. Based on information received from the home position sensor 45 the controller 44 determines that the driver 80 is at the home position irrespective of other position data the controller 44 receives or calculates regarding the driver 80.

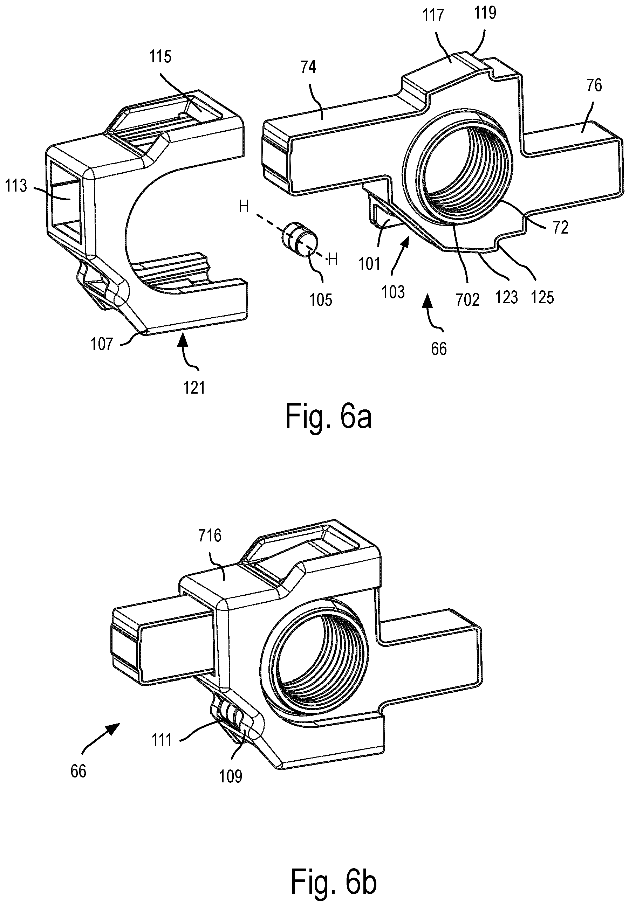

Fig 6a illustrates an exploded view of the anti-rotation bar 66 which, as already mentioned, has a central hole 72 with a threaded inner surface which is tightly threadably engaged with the reciprocal threaded surface 75 at an end of the threaded rod 62. The anti-rotation bar 66 has a mounting plate 101 projecting from a central portion 103 of the anti-rotation bar 66. A magnet 105 is mounted to the mounting plate 101. A sleeve housing 107 is mounted over the anti-rotation bar 66 as shown in Fig. 6b.

The sleeve housing 107 comprises a magnet pocket 109 for receiving the magnet 105 and the sleeve housing 107 ensures that the magnet 105 does not move with respect to the anti-rotation bar 66 when mounted to the anti-rotation bar 66 as shown in Fig. 6b. The magnet pocket 109 comprises a window 111 exposing a portion of the magnet 105. This means that the sleeve housing 107 is not positioned between the magnet 105 and the home position sensor 45. The home position sensor 45 is a Hall sensor as shown in Figs 5. Accordingly, the sleeve housing 107 itself does not attenuate the magnetic field generated from the magnet 105 in the direction of the home position sensor 45 when the driver 80 is in the home position as shown in Fig. 5.

The sleeve housing 107 comprises an arm window 113 configured to receive the first arm 74. When the sleeve housing 107 is mounted on the anti-rotation bar 66, the first arm 74 projects through the arm window 113. The sleeve housing 107 comprises a snap-fit mechanism 115 for engaging a locking ramp 117 and snapping against a locking shoulder portion 119 of the anti-rotation bar 66. This securely engages the sleeve housing 107 against the anti-rotation bar 66. The sleeve housing 107 comprises a similar lower snap-fit mechanism 121 configured to engage a lower locking ramp 123 and snapping against a lower locking shoulder portion 125 of the anti-rotation bar 66.

Looking at Fig. 5 the portable electric pressing tool 10 comprises a printed circuit board (PCB) 127 comprising the home position sensor 45. The home position sensor 45 is configured to detect the magnet 105 when the driver 80 is in the home position. The home position sensor 45 and the magnet 105 are arranged to be close to each other when the driver 80 is in the home position. In some examples, the minimum distance X₁ (as shown in Fig. 5) between the home position sensor 45 and the magnet 105 is 1.1 mm. It has been noted that this minimum distance allows for sufficient sensitivity in the home position sensor 45 detecting relative movement of the magnet 105 with respect to the home position sensor 45. At the same time this allows sufficient clearance between the first and second arms 74, 76 and the first and second slots 69, 70 to allow slidable movement of the first and second arms 74, 76 in the first and second slots 69, 70.

As mentioned above, the anti-rotation bar 66 is axially and rotationally fixed relative to the threaded rod 62 and is rotationally fixed with respect to the housing 12. Given that the driver 80 is caused to move axially upon axial movement of the threaded rod 62 this means that the anti-rotation bar 66, the magnet 105, the threaded rod 62 and the driver 80 move together along the axis B-B in use. Detecting movement of the magnet 105 thus allows movement of the driver 80 to be detected.

The home position sensor 45 is configured to detect a specific magnetic pole. In other words, the home position sensor 45 is configured to detect magnetic flux of one polarity while being blind to magnetic flux of the other polarity, meaning the home position sensor 45 generates a signal in response to detection of a specific pole of the magnet 105. For example, the home position sensor 45 is configured to detect magnetic flux emanating from the north pole of the magnet 105 while being blind to magnetic flux emanating from the south pole of the magnet 105, meaning the home position sensor 45 generates a signal in response to detection of the north pole of the magnet 105. The portable electric pressing tool 10 is configured such that the middle portion of the magnet 105 - the transition between north and south magnetic poles - is aligned with the home position sensor 45 when the driver 80 is in the home position. That is, upon occurrence of a change in polarity of the magnetic flux to which the home position sensor 45 is exposed then the home position sensor 45 generates a signal which is indicative of the driver 80 being in the home position.

This can be used to detect when the driver 80 has reached its home position during a reset stage of operation of the portable electric pressing tool 10. Continuing with the example in which the home position sensor 45 is configured to detect magnetic flux emanating from the north pole of the magnet 105 only while being blind to magnetic flux emanating from the south pole of the magnet 105: the magnet 105 may be aligned such that during a pressing operation when the driver 80 and the magnet 105 move away from the home position sensor 45 the home position sensor 45 is only exposed to magnetic flux emanating from the south pole of the magnet 105 meaning no signal is generated by the home position sensor 45. During a reset stage of operation of the portable electric pressing tool 10 as the driver 80 is moved towards the home position, and the magnet 105 is moved towards the home position sensor 45, the home position sensor 45 is exposed to magnetic flux emanating from the south pole of the magnet 105 meaning no signal is generated by the home position sensor 45. However, after the driver 80 has reached the home position and continues to move beyond the home position, the magnet 105 moves past the home position sensor 45 such that the home position sensor 45 is only exposed to magnetic flux emanating from the north pole of the magnet 105 meaning a signal is suddenly generated by the home position sensor 45. The controller 44 can use this signal to determine that the reset stage of operation is complete.

As shown in Fig. 6a, the magnet 105 comprises a magnetic axis H-H which extends in a direction between opposite poles of the magnet 105 and the magnetic axis H-H is parallel with the second longitudinal axis B-B of the portable electric pressing tool 10 along which the driver 80 moves from the home position to an active position during a pressing operation. In some examples the heretofore described arrangement is configured to detect variations in position of the magnet 105 as low as 0.6mm, which means the driver 80 can be determined to have reached the home position to an accuracy of 0.6mm.

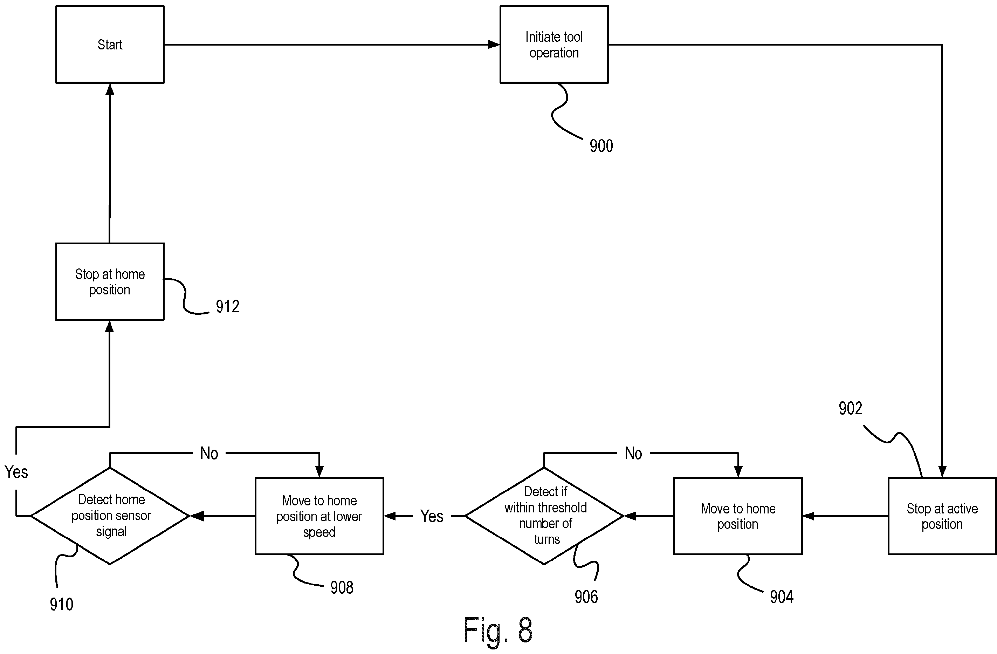

Operation of the portable electric pressing tool 10 will now be discussed in more detail with respect to Figs 8, 9 and 10. In summary during a pressing stage of operation the controller 44 is able to track the axial position of the driver 80 based on the number of turns (or partial turns) of the brushless electric motor 46 determined from information output by the brushless electric motor 46 (more specifically, information output by control electronics/circuitry of the brushless electric motor 46) and during a reset stage of operation the controller 44 is able to determine when the driver 80 has returned to its home position based on output from the home position sensor 45.

Fig. 8 shows a simplified mode of operation of the portable electric pressing tool 10. The functionality illustrated in Fig. 8 is implemented by the controller 44 on the basis of software stored in memory 41, whereby upon the controller 44 running such software it implements the functionality illustrated in Fig. 8. The controller 44 is configured to control the portable electric pressing tool 10 based on only a signal received from the home position sensor 45 and motor turn information. This means that the controller 44 can control the axial movement of the driver 80 based on only the motor turn information and the output generated by the home position sensor 45. Advantageously, this reduces the complexity of the portable electric pressing tool 10 and therefore reduces the likelihood of sensor failure because the number of position sensors used in the portable electric pressing tool 10 is reduced.

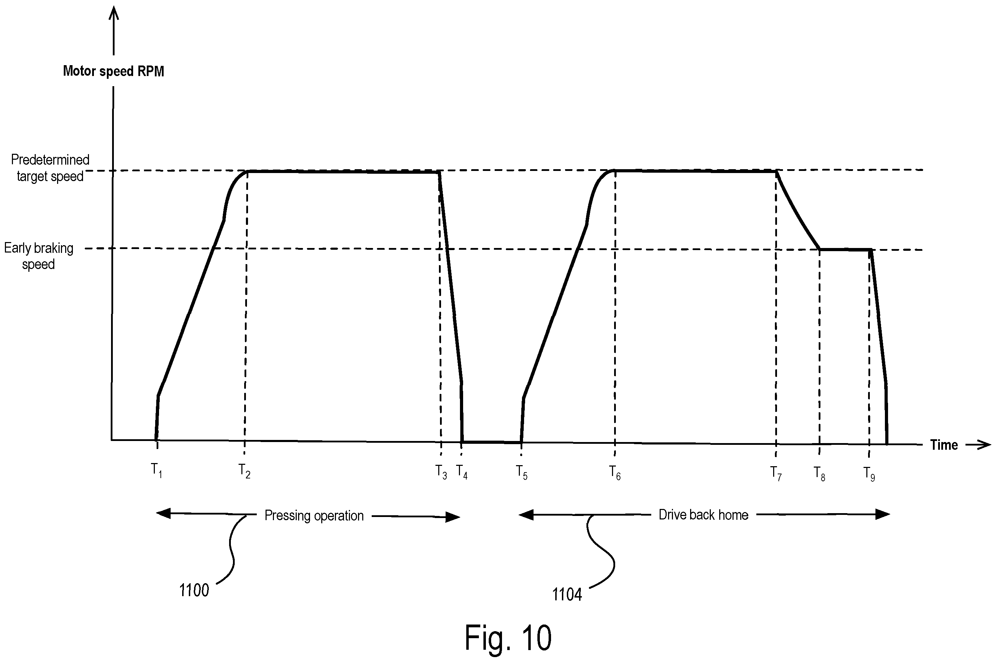

Based on input from the trigger sensor 43 the controller 44 initiates an operation to move the driver 80 and the jaws 21, 22 from a home position to an active position as shown in step 900 of Fig. 8. The driver 80 is in the home position when the controller 44 starts the pressing operation (denoted 1100 in Fig. 10). The controller 44 starts the pressing operation by issuing a control instruction to the motor 46 at time t = T₁ whereby the motor 46 is caused to ramp up in speed to a predetermined target speed which is attained at time T₂ shown in Fig. 10. In some examples the predetermined target speed is the maximum driving speed of the motor 46. In some examples the predetermined target speed may fall in the range between 24,000 RPM to 30,000 RPM. By configuring the portable electric pressing tool 10 so that the predetermined target speed of the motor 46 between T₁ and T₂ is the maximum driving speed of the motor 46 this provides that the driver 80 moves from the home position to the active position as quickly as possible. It will however be appreciated that in practice the maximum driving speed of the motor 46 is dependent on various factors such as the level of charge of the battery 14, the temperature of the battery 14, the magnitude of force required to press the object in a pressing operation and the magnitude of friction experienced by internal features of the portable electric pressing tool 10 in use.

The controller 44 issues another control instruction to stop the motor 46 when the threaded rod 62 and thus the driver 80 are in the active position as shown in step 902, wherein how this is determined is explained below. In response the motor 46 brakes at t=T₃ and stops at t=T₄; preferably between t=T₃ and t=T₄ the motor 46 is braked at the maximum achievable deceleration rate.

In one mode of operation a user manually controls the pressing action by releasing the trigger 19 when they determine that the jaws 21, 22 are sufficiently squeezing the object between the jaws 21, 22. Upon releasing the trigger 19 the trigger sensor 43 generates a signal indicative of this whereby the controller 44 causes the motor 46 to stop according to step 902. Subsequently if the controller 44 does not receive within a threshold amount of time another signal from the trigger sensor 43 indicative that the trigger 19 has been re-pulled the controller 44 implements step 904 whereas if the controller 44 does receive such a signal within the threshold amount of time, then it causes the motor 46 to continue the pressing operation. Even during such manual mode of operation, the controller 44 tracks the position of the driver 80 by counting the number of motor turns to have occurred during the pressing operation. As a safety precaution the controller 44 will stop the pressing operation, and implement step 902, if the motor 46 is caused to turn by a threshold number of times during the pressing operation.

As mentioned the controller 44 is configured to receive motor turn information from the brushless electric motor 46 (more specifically such information is output by control electronics/circuitry of the brushless electric motor 46).

This means that the controller 44 is configured to determine the position of the threaded rod 62 and thus the driver 80 when moving towards the active position away from the home position based on motor turn information alone.

The portable electric pressing tool 10 then needs to perform a drive back home operation (denoted 1104 in Fig. 10), alternatively referred to as a reset stage of operation, in order to move the driver 80 back to the home position in order to be ready to implement a subsequent pressing operation. To enact the reset stage of operation the controller 44 issues a control instruction to the motor 46 to drive in a reverse direction and thereby move the driver 80 towards the home position as shown in step 904. In response to the controller 44 issuing this instruction at T=T₅ the motor 46 is caused to ramp up in speed (in a reverse direction) to the predetermined target speed which is attained at t=T₆. As a reminder, in some examples the predetermined target speed is the maximum driving speed of the motor 46 so that the driver 80 moves from the active position towards the home position as quickly as possible; again though as mentioned previously the maximum driving speed of the motor 46 which is achievable in practice is dependent on various factors such as the level of charge of the battery 14, the temperature of the battery 14 and the magnitude of friction experienced by internal features of the portable electric pressing tool 10 in use.

In order to protect the portable electric pressing tool 10, the controller 44 does not drive the motor 46 at the predetermined target speed through the entire distance that the driver 80 moves towards the home position. Instead, the controller 44 is configured to cause the motor 46 to drive in reverse direction at a reduced speed when the driver 80 is determined by the controller 44 to be within a threshold distance of the home position, which will be described in more detail later.

During reverse driving of the motor 46 in step 906 of Fig. 8 the controller 44 compares the number of motor turns occurring during reverse movement with the number of motor turns which occurred during the pressing operation. When the number of motor turns determined to have occurred during reverse movement is within a threshold amount of the number of motor turns which occurred during the pressing operation the controller 44 in step 908 causes the motor driving speed in the reverse direction to be reduced so that the driver 80 can be more precisely positioned in the home position to reduce the extent to which the driver 80 overshoots the home position. The threshold amount is realised in step 906 when the number of motor turns determined to have occurred during reverse movement is within 25% of the number of motor turns which occurred during the pressing operation. In other words, the threshold condition of step 906 is realised when the driver 80 has been driven 75% of the way back towards its home position. If during reverse driving of the motor 46 in step 906 the controller 44 determines that the threshold condition has not been satisfied the motor 46 is caused to continue driving in reverse at the predetermined target speed wherein step 906 is repeated.

Returning to Fig. 10, in response to the controller 44 in step 908 issuing a control instruction to slow the motor 46 down at time T₇ the motor 46 decelerates to a predetermined early braking speed which is lower than the predetermined target speed of the motor 46 between times T₂ to T₃ and T₆ to T₇. In this way, the controller 44 provides early braking to the motor 46 before the driver 80 reaches the home position.

In embodiments in which the predetermined motor target speed between times T₂ to T₃ and T₆ to T₇ ranges between 24,000 RPM to 30,000 RPM the predetermined early braking speed ranges between 15,000 RM to 20,000 RPM. More specifically in an embodiment in which the target motor driving speed between T₂ to T₃ and T₆ to T₇ is 24,000 RPM the early braking speed is 15,000 RPM. In another embodiment in which the target motor driving speed between T₂ to T₃ and T₆ to T₇ is 30,000 RPM the early braking speed is 20,000 RPM.

The rate of deceleration between times T₇ and T₈ when the motor 46 reaches the predetermined early braking speed is such that the early braking speed is achieved before the driver 80 reaches the home position, wherein the rate of deceleration between T₇ and T₈ can be the maximum achievable deceleration rate although there is freedom to use a less steep rate of deceleration provided that the early braking speed is achieved before the driver 80 reaches the home position. When the early braking speed has been achieved at time t = T₈ the controller 44 controls the motor 46 to keep driving at that speed until the controller 44 detects input from the home position sensor 45 in step 910 which is indicative that the driver 80 has reached the home position as heretofore described. In response the controller 44 issues in step 912 at t = T₉ a stop instruction to stop the motor 46 completely whereby the motor 46 decelerates (preferably at the maximum achievable deceleration rate) until the motor 46 stops turning.

When the controller 44 receives the signal from the home position sensor 45 in step 910 the controller 44 is configured to reset the motor turn information stored in memory 41 to correspond with the driver 80 being in the home position. For example, the controller 44 resets the active number of motor turns to zero. This means that any drift between the active number of motor turns determined by the controller 44 and the actual number of motor turns is reset to zero each time the portable electric pressing tool 10 is operated.

This means that the controller 44 is configured to determine the position of the driver 80, and thereby control the operating speed of the motor 46, when the driver 80 is moving towards the home position based on the motor turn information and a signal received from the home position sensor 45.

The driver 80 has now returned to the home position and the portable electric pressing tool 10 is ready to implement a subsequent pressing operation.

As already mentioned, the maximum driving speed of the motor 46 which is achievable in practice is dependent on multiple factors such as the level of charge of the battery 14, the temperature of the battery 14, the magnitude of force required to press a particular object, and the magnitude of friction experienced by internal features of the portable electric pressing tool 10 in use. In tools in which a driver 80 is driven backwards during a reset stage of operation at maximum speed all the way until the home position is detected and a complete stop of the motor 46 is initiated the level of overshoot passed the home position is variable based on the multiple factors affecting the maximum driving speed of the motor 46. Thus, when such tools are designed, they need to have high tolerances built into the design to accommodate the variable extents which the driver 80 may overshoot the home position. The heretofore described early braking functionality addresses this issue. The early braking speed is chosen to be lower than the maximum driving speed of the motor 46 and so is less affected by the factors mentioned above such as battery charge level, meaning that the portable electric pressing tool 10 can more reliably control the motor 46 to operate at a specific predetermined early braking speed. By causing the motor 46 to have slowed down to the early braking speed by the time when the driver 80 reaches the home position means that when the home position is finally reached, and the driver 80 is braked hard, the driver 80 is always braking from the same speed regardless of tool operating conditions (e.g. ambient temperature/battery charge level) and so the level of overshoot passed the home position is more predictable meaning the portable electric pressing tool 10 can be controlled within tighter operational tolerances, whereby the tolerances required to be built into the tool design are less.

In view of the foregoing paragraph, it will be appreciated that there is some freedom for a designer to select a suitable percentage change reduction in motor speed during a reset stage of operation between the predetermined target speed and the early braking speed. If the early braking speed is very low this will of course reduce the potential level of overshoot of the driver 80 passed the home position, however, the overall duration of the reset stage of operation will be increased. On the other hand, if the early braking speed is much closer to the predetermined target speed this will reduce the overall duration of the reset stage of operation but will increase the potential level of overshoot of the driver 80 passed the home position. Some balance must therefore be struck in selecting a suitable percentage change reduction in motor speed during a reset stage of operation between the predetermined target speed and the early braking speed, which maintains the potential level of overshoot of the driver 80 passed the home position within acceptable levels while maintaining a reasonable overall duration of the reset stage of operation. With this in mind, it is envisaged that in some embodiments during a reset stage of operation the early braking speed can range between 50% to 80% of the predetermined target speed. In some embodiments during a reset stage of operation the early braking speed can range between 60% to 70% of the predetermined target speed. In some embodiments during a reset stage of operation the early braking speed can range between 62% to 67% of the predetermined target speed.

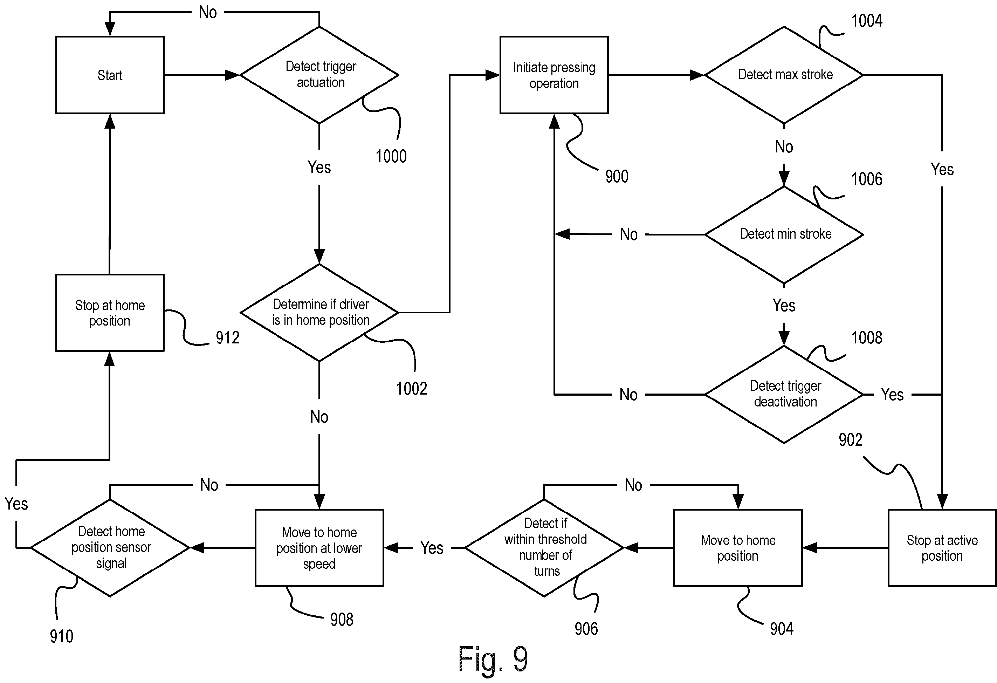

Another example will now be discussed with reference to Fig. 9 which is identical to Fig. 8 except that the operation of the portable electric pressing tool 10 comprises additional functionality which will now be described. The functionality illustrated in Fig. 9 is implemented by the controller 44 on the basis of software stored in memory 41, whereby upon the controller 44 running such software it implements the functionality illustrated in Fig. 9.

The controller 44 is configured to actuate the portable electric pressing tool 10 in response to receiving an actuation signal from the trigger sensor 43 in step 1000. The controller 44 then determines that the user wishes to use the portable electric pressing tool 10 and in response determines whether the driver 80 is in the home position in step 1002. The controller 44 can determine whether the driver 80 is in the home position similarly to before, namely based on whether a signal is generated by the home position sensor 45. If in step 1002 the controller 44 determines that a signal is generated by the home position sensor 45 then the driver 80 is determined to be in the home position and in response the controller 44 proceeds to step 900 and initiates the pressing operation.

Conversely if in step 1002 the controller 44 determines that a signal is not generated by the home position sensor 45 then the driver 80 is determined not to be in the home position. This may be the case if power was removed before the portable electric pressing tool 10 could finish performing a reset stage of operation 1104. In response to the controller 44 making a negative determination in step 1002 it issues a control instruction to drive the motor 46 in reverse at a low speed in step 908 until in step 910 the controller 44 detects a signal generated by the home position sensor 45 indicative that the driver 80 is in the home position; the low reverse driving speed of the motor 46 is lower than the aforementioned target driving speed between T₂ to T₃ and T₆ to T₇ discussed in connection with Fig. 10.

In some embodiments in which the target motor driving speed between T₂ to T₃ and T₆ to T₇ ranges between 24,000 to 30,000 RPM the low reverse driving speed ranges between 15,000 to 20,000 RPM. More specifically in an embodiment in which the target motor driving speed between T₂ to T₃ and T₆ to T₇ is 24,000 RPM the low reverse driving speed is 15,000 RPM. In another embodiment in which the target motor driving speed between T₂ to T₃ and T₆ to T₇ is 30,000 RPM the low reverse driving speed is 20,000 RPM.

In response to the controller 44 receiving a positive determination in step 910 subsequently the controller 44 in step 912 stops reverse driving of the motor 46 (preferably at the maximum achievable deceleration rate), whereby the driver 80 is now in the home position. When the user subsequently releases and depresses the trigger 19 the tool repeats steps 1000, 1002 and then proceeds to step 900 to initiate the pressing operation.

Once the pressing operation has been initiated, the controller 44 determines the displacement of the driver 80 from the home position in the manner already described based on counting motor turns. If the controller 44 determines in step 1004 that the number of motor turns during the pressing operation has reached a predetermined maximum number of motor turns stored in memory 41 (whereby the driver 80 is in the maximum permissible pressing position) the controller 44 stops the motor 46 in step 902 as before. When the driver 80 is in the maximum permissible pressing position, the driver 80 cannot move any further away from the home position in the axial direction. Accordingly, the motor 46 cannot rotate any further to move the driver 80 away from the home position.

If the controller 44 makes a negative determination in step 1004 the controller 44 continues the pressing operation and then determines in step 1006 whether the number of motor turns during the pressing operation has reached a predetermined minimum number of motor turns stored in memory 41.

If in step 1006 the controller 44 makes a negative determination the controller 44 continues the pressing operation.

If in step 1006 the controller 44 makes a positive determination the controller 44 then determines in step 1008 whether the trigger 19 is deactivated based on input from the trigger sensor 43.

If in step 1008 the controller 44 makes a negative determination, then the controller 44 continues the pressing operation in step 900. However, if in step 1008 the controller 44 makes a positive determination the controller 44 stops the motor 46 in step 902 as before.

Subsequently steps 904 to 912 in Fig. 9 are implemented in a similar manner to the correspondingly numbered steps in Fig. 8 which have already been discussed.

It will be appreciated that whilst various aspects and embodiments have heretofore been described the scope of the present invention is not limited thereto and instead extends to encompass all arrangements, and modifications and alterations thereto, which fall within the spirit and scope of the appended claims.

It will be appreciated that the planetary gear arrangement 51 between the motor output shaft 48 and the input pinion 52 of the bevel gear arrangement 49 may have just one gear stage or multiple gear stages depending on the torque output to be achieved by the planetary gear arrangement 51. Factors influencing the number of gear stages within the planetary gear arrangement 51 include, without limitation, the size of the gears, length of the handle 18, maximum motor torque, thickness of the input pinion 52 and friction between moveable features within the portable electric pressing tool 10 to be manufactured. As such the planetary gear arrangement 51 in some portable electric pressing tools 10 will only have a single planetary gear stage whereas other tools will have a plurality of planetary gear stages arranged in series.

Although the battery 14 up to now is said to be releasably connected to a base 16 of the handle 18 via a battery attachment portion in other embodiments the battery 14 may be permanently within the housing 12 and not removable and such tools must be capable of connecting to a power source to charge the battery 14.

The electric motor 46 has been described up to now as being located entirely within the handle 18. However, in some embodiments, the electric motor 46 can be located at least partly within the handle 18 meaning that part of the motor 46 is located in the handle 18 where a user grips the tool in use whereas part of the motor 46 is located above the handle 18 and thus above where a user grips the tool in use.

The electric motor 46 has up to now been described as a brushless DC motor however in other embodiments other suitable electric motors can be used instead such as a brushed motor having a motor output shaft driven by a stator and having at least one magnet on the motor output shaft 48.

It will be appreciated that in some embodiments the first and second metal housing parts 23, 81 of the pressing mechanism 20 can be formed as a single metal housing part.

The planetary gear arrangement 51 has been described up to now as being located entirely within the handle 18. However, in some embodiments, the planetary gear arrangement 51 can be located at least partly within the handle 18 meaning that part of the planetary gear arrangement 51 is located in the handle 18 where a user grips the tool in use whereas part of the planetary gear arrangement 51 is located above the handle 18 and thus above where a user grips the tool in use.

The driving sleeve 54 and input sleeve 56 may be fixed relative to each other due to a friction fit arrangement. However, in other examples, the driving sleeve 54 and input sleeve 56 can be fixed together with other methods e.g., adhesive, welding, spline-fit engagement etc. Alternatively, the driving sleeve 54 and input sleeve 56 can be a single unitary element.

Although the jaws 21, 22 have been described up to now as pressing jaws the term pressing is not limited to compressing or crushing. Moreover, crimping tools are just one implementation of a pressing tool whereas tools with jaws for compressing or crushing things other than crimping rings are also considered pressing tools. Jaws for compressing or crushing something e.g. compressing a crimping ring or other object are merely a subset of pressing jaws whereas the generality of pressing jaws extends to jaws that cut objects too. Jaws configured to cut an object are merely shaped such that when they press an object between them they cause the object to be cut as opposed to compressed or crushed. So in summary even though the portable electric pressing tool 10 has been described as having jaws 21, 22 with pressing surfaces 28 for compressing or crushing something e.g. a crimping ring it will be appreciated that the configuration of the jaws 21, 22 can be changed depending on the intended purpose of the portable electric pressing tool 10, wherein the portable electric pressing tool 10 could be provided with jaws for compressing or crushing something or alternatively the portable electric pressing tool 10 could be provided with jaws for cutting something. Alternatively, the portable electric pressing tool 10 could be provided with jaws 21,22 configured to receive removable inserts wherein some inserts are shaped to enable the jaws to implement a compression or crushing operation whereas some inserts are shaped to enable the jaws to implement a cutting operation. Whether the portable electric pressing tool 10 is configured to compress, crush or cut something between its jaws 21, 22 the portable electric pressing tool 10 is still considered a portable electric pressing tool 10.

Figs. 2 and 3 respectively show the pressing mechanism 20 and the driver 80 in the home position and the active position. In an alternative example, the jaws 21, 22 can be profiled such that the jaws 21, 22 can be pulled by the driver 80 whereby upon pulling the driver 80 away from the jaws 21, 22 the jaws 21, 22 close and can exert a pressing force on an object. In this alternative example, the driver 80 is in the active position when the driver 80 is retracted in a direction towards the handle 18 of the portable electrical pressing tool 10. Likewise, in this alternative example during a reset operation the driver 80 moves axially away from the retracted position towards the home position.

In some embodiments, the jaws 21,22 of the pressing mechanism 20 can be biased towards the closed position by a biasing member 85 such as a spring instead of being biased towards the open position. In such embodiments the user can open the jaws 21, 22 by pressing on an outer surface of each of the proximal portions of the jaws 21, 22.

The biasing member 85 is a coil spring, a leaf spring, or any other suitable resilient means for biasing the jaws 21, 22 to the open or closed position.

The conversion mechanism 58 which converts torque originating from the electric motor 46 into linear force for actuating the jaws 21, 22 of the pressing mechanism 20 is described as being a ball screw mechanism 58. However, alternatively, in some embodiments the portable electric pressing tool 10 may have a roller screw mechanism (sometimes known as a planetary roller screw mechanism) instead of a ball screw mechanism for converting torque into linear force. A person skilled in the art will appreciate that this can be achieved by rotationally fixing the driving sleeve 54 to an input sleeve 56 of the roller screw mechanism; wherein a set of rollers (sometimes called planetary rollers) are provided between the internal surface of the input sleeve 56 and an external surface of the threaded rod 62. When the driving sleeve 54 is caused to rotate it drives rotation of the input sleeve 56 of the roller screw mechanism and thus via the rollers causes linear movement of the threaded rod 62 and thus causes actuation of the pressing mechanism 20. Roller screw mechanisms achieve higher pushing force relative to similarly sized ball screw mechanisms so by providing a tool with a roller screw mechanism a higher pressing force of the jaws 21, 22 will be enabled compared to using a similar sized ball screw mechanism 58.

The controller 44 is described with reference to Fig. 7 above and whilst illustrative embodiments have been described as employing software it will be appreciated by persons skilled in the art that the functionality provided by such software may instead be provided by hardware (for example by one or more application specific integrated circuits), or indeed by a mix of hardware and software.

In general, the functionality described in connection with Figs. 8 and 9 may be implemented in hardware or special purpose circuits, software, logic, or any combination thereof. For example, some aspects may be implemented in hardware while other aspects may be implemented in firmware or software which may be executed by the controller 44, microprocessor or other computing device although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or by the controller 44 or other computing devices or some combination thereof.

It will be appreciated that in some embodiments the motor turn information received by the controller 44 from the brushless electric motor 46 (more specifically, from control electronics/circuitry of the brushless electric motor 46) is directly indicative of the number of motor turns of the electric motor. In other embodiments the controller 44 determines the number of motor turns based on additional processing of the motor turn information received by implementing software functionality stored in memory 41. In other words in some embodiments the controller 44 receives information directly indicative of the number of active motor turns and in other embodiments the controller 44 itself calculates the number of active motor turns.

The memory 41 may be of any type suitable to the local technical environment and may be implemented using any suitable data storage technology, such as semiconductor-based memory devices, magnetic memory devices and systems, optical memory devices and systems, fixed memory, and removable memory. Also, the controller 44 may be of any type suitable to the local technical environment, and may include one or more of general-purpose microprocessors, digital signal processors (DSPs) or processors based on multi core processor architecture as non-limiting examples.

Some examples of the disclosure may be implemented as a chipset, in other words a series of integrated circuits communicating among each other. The chipset may comprise microprocessors arranged to run code, application specific integrated circuits (ASICs), or programmable digital signal processors for performing the operations described above.

As shown in Fig. 6a, the anti-rotation bar 66 optionally comprises the mounting plate 101 projecting from the central portion 103 of the anti-rotation bar 66 for receiving the magnet 105. In some other examples, the magnet 105 is mounted to the central portion 103 (or any other part of the anti-rotation bar 66) in a recess in the central portion 103. The magnet 105 is optionally mounted to the anti-rotation bar 66 (whether in a recess or on the mounting plate 101) using glue or the attractive magnetic force of the magnet 105 against the ferrous anti-rotation bar 66.

It will be appreciated that the specific shape of the anti-rotation bar 66 and position of the slots 69, 70 can be adapted, provided that the anti-rotation bar 66 achieves the purpose of guiding axial movement of the threaded rod 62. Moreover, the specific location of the magnet 105 on the anti-rotation bar 66 and the way in which the magnet 105 is attached to the anti-rotation bar 66 may be adapted provided that the controller 44 is still able to determine when the driver 80 is in the home position based on interaction between the magnet 105 and home position sensor 45.

In some embodiments instead of mounting the magnet 105 on the anti-rotation bar 66 the magnet 105 can alternatively be mounted to another component which moves together with the threaded rod 62 during operation of the portable electric pressing tool 10, wherein the position of the home position sensor 45 is correspondingly adapted.

As already described in connection with step 906 (as shown in Figs 8 and 9) the threshold amount is realised when the number of motor turns determined to have occurred during reverse movement is within 25% of the number of motor turns which occurred during the pressing operation. However there is flexibility in the specific distance implemented in practice provided the same overall functionality is achieved, for instance in some embodiments the threshold amount is realised in step 906 when the number of motor turns determined to have occurred during reverse movement reaches a specific percentage of the number of motor turns which occurred during the pressing operation ranging between 75% to 95% (optionally between 85% to 905%) of the number of motor turns which occurred during the pressing operation.

The motor 46 has been described as being a brushless motor and the controller 44 cooperates with the brushless motor (in particular with its control electronics) in order to control the brushless motor and determine motor turn information e.g. number of motor turns. In other embodiments however the motor 46 may be a brushed motor having a motor output shaft driven by a stator and having at least one magnet on the motor output shaft 48. For the controller 44 to determine motor turn information of such a brushed motor the portable electric pressing tool 10 additionally has a motor sensor (not shown) for generating output indicative of motor turn information; such as a Hall sensor which cooperates with the at least one magnet on the motor output shaft 48 and which generates output indicative of variations in magnetic flux density as the motor shaft rotates which can be used by the controller 44 to determine motor turn information, namely number of motor turns. Since the concept of determining motor turn information in the context of brushed and brushless motors is already known, meaning that the aforementioned ways of determining motor turn information are not the only ways of doing so, there is freedom for a designer to select a way of determining motor turn information when designing a portable electric pressing tool 10 which implements the invention described herein. Whether or not a brushless motor is used the controller 44 can determine the direction of rotation of the motor 46 based on whether the controller 44 is implementing a pressing operation (in which case the motor 46 will be rotating in a first direction) or whether the controller 44 is implementing a reset stage of operation (in which case the motor 46 will be rotating in a second direction). It is mentioned here that in battery operated embodiments the motor 46 is configured to operate using DC current, whereas in mains operated embodiments the motor is configured to operate using AC current.

In some embodiments the angle between the first longitudinal axis A-A and the second longitudinal axis B-B may not be 90 degrees and instead may range between 45 degrees to 145 degrees, which is achievable by adjusting the angle at which the input pinion 52 and the bevel gear 53 of the bevel gear arrangement 49 mesh.

It has already been mentioned that by providing the motor 46 within the handle 18 leaves more space available within the tool housing 12 above the handle 18, whereby there is more freedom to position features of the portable electric pressing tool 10 in positions which improve weight distribution of internal features of the portable electric pressing tool 10. By providing the motor 46 only partially within the handle 18 achieves such an advantage to a lesser extent. By providing the motor 46 and also at least part of the transmission 50 within the handle 18 achieves such advantage to a greater extent. By providing the motor 46 and also the transmission 50 within the handle 18 achieves such an advantage to a fuller extent.

As shown in Figs. 2 and 3, in some embodiments the threaded rod 62 is fixed directly to driver 80 such as via a plug and socket-type attachment whereby one of the threaded rod 62 and the driver 80 plugs into the other, or via a threaded attachment arrangement whereby one of the threaded rod 62 and the driver 80 is threadably received by the other, or via an adhesive arrangement whereby the threaded rod 62 is bonded to the driver 80; in some embodiments the threaded rod 62 and driver 80 are welded together.

However, alternatively, in some other examples, an intermediate connector (not shown) is provided between the threaded rod 62 and the driver 80. Various suitable types of intermediate connector will be apparent to persons skilled in the art. For example, the intermediate connector has a first attachment portion for attaching to the driver 80 and also a second attachment portion for attaching to the threaded rod 62. The first attachment portion may be a plug and socket-type attachment arrangement for mating with an appropriately shaped part of the driver 80, or a threaded attachment arrangement for threadably engaging with part of the driver 80 or alternatively the first attachment portion may be attached to the driver 80 via adhesive or welding. Similarly, the second attachment portion may be a plug and socket-type attachment arrangement for mating with an appropriately shaped part of the threaded rod 62, or a threaded attachment arrangement for threadably engaging with the threaded rod 62 or alternatively the second attachment portion may be attached to the threaded rod 62 via adhesive or welding.

The heretofore described portable electric pressing tool 10 has an anti-rotation bar 66 for preventing rotation of the threaded rod 62. In some embodiments the portable electric pressing tool 10 can omit an anti-rotation bar 66 whereas rotation of the threaded rod 62 is prevented by cooperation between the driver 80 and a fixed part of the portable electric pressing tool 10 e.g. the first metal housing part 23 of the pressing mechanism 20 which permit relative axial movement but not relative rotational movement, in which case the magnet 105 is mounted to another suitable feature of the portable electric pressing tool 10 which moves with the threaded rod 62 and in some embodiments the magnet 105 is coupled to an axial extension at the rear of the threaded rod 62.

As an alternative to the heretofore described magnet/Hall sensor way of determining that the driver 80 has arrived at the home position during a reset stage, a mechanical switch (not shown) may be provided within the portable electric pressing tool 10 whereby following a pressing operation and upon initiation of reverse movement of the electric motor 46 for causing a reset stage of operation the controller 44 is configured to detect output from the mechanical switch indicative that the first or second arm 74, 76 of the anti-rotation bar 66 actuates the mechanical switch, thereby indicating that the driver 80 has returned to the home position; in other words step 910 may be implemented by the controller 44 determining that the anti-rotation bar 66 has engaged a mechanical switch. Alternatively, an optical sensor (not shown) may be provided within the portable electric pressing tool 10 which generates output based on the presence or absence of the anti-rotation bar 66 or threaded rod 62 wherein based on output from the optical sensor the controller 44 can determine when the driver 80 has returned to the home position; in other words step 910 may be implemented based on output from an optical sensor that the anti-rotation bar 66 or threaded rod 62 has reached a certain axial position.

## Claims

1. A portable electric pressing tool comprising:
an electric motor;
a pressing mechanism having a pair of jaws and a driver wherein the pressing mechanism is operatively coupled to the electric motor for causing axial displacement of the driver between a home position and an active position for actuating the jaws;
a home position sensor for generating output indicative that the driver has reached the home position during a reset stage of operation in which the driver is moved towards the home position; and
a controller for receiving motor turn information indicative of the number of turns of the electric motor and for controlling axial movement of the driver in use based only on the motor turn information and the output generated by the home position sensor.

2. The portable electric pressing tool of any preceding claim wherein the controller determines that the driver has reached a maximum permissible axial position when the number of motor turns determined during movement of the driver away from the home position reaches a predetermined maximum number of motor turns stored in memory, whereby in response the controller stops the driver.

3. The portable electric pressing tool of claim 1 or 2 wherein the home position sensor is a Hall sensor mounted in a fixed position within the tool which is configured to detect a magnet which is axially fixed relative to the driver.

4. The portable electric pressing tool of claim 3 wherein the Hall sensor generates a signal when exposed to magnetic flux from the magnet of one polarity but not when exposed to magnetic flux of the other polarity and the magnet is arranged so that as the magnet moves past the Hall sensor in use the Hall sensor generates a signal indicative that the driver has reached the home position during the reset stage of operation.

5. The portable electric pressing tool of any preceding claim wherein the controller is configured to control the motor to move the driver to the home position if in response to receiving a tool actuation signal the controller determines that the driver is not in the home position.

6. The portable electric pressing tool of any preceding claim wherein during the reset stage of operation, in which the driver is moved towards the home position, the controller is configured to decelerate the electric motor before the driver reaches the home position.

7. The portable electric pressing tool of claim 6 wherein during the reset stage of operation the controller is configured to drive the electric motor at a first target speed during a first portion of the reset stage of operation and to decelerate the electric motor upon determination by the controller that the driver is within a threshold distance from the home position, optionally wherein the threshold distance is reached when the driver has travelled at least 75% of the way back towards the home position.

8. The portable electric pressing tool of claim 7 wherein the first target speed is the maximum driving speed of the electric motor.

9. The portable electric pressing tool of claim 7 or 8 wherein the electric motor is decelerated to a second predetermined speed which is maintained until the controller subsequently determines that the driver is at the home position wherein in response the controller decelerates the motor to a stop, optionally wherein the second predetermined speed ranges between 50% to 80% of the first target speed.

10. The portable electric pressing tool of any of claims 7 to 9 wherein the controller is configured to determine when the driver is within the threshold distance from the home position when the number of motor turns determined during the reset stage of operation is within a threshold number of the number of motor turns determined during movement of the driver to the active position, optionally wherein the controller determines the driver is at the threshold distance from the home position when the number of motor turns determined to have occurred during the reset stage of operation is at least 75% of the number of motor turns determined to have occurred during movement of the driver to the active position.

11. The portable electric power tool of any preceding claim wherein the electric motor is a brushless motor and control circuitry thereof generates the motor turn information.

12. The portable electric power tool of any preceding claim further comprising at least one sensor for monitoring turns of the electric motor and for generating the motor turn information.

13. The portable electric pressing tool of any preceding claim wherein the pair of jaws comprises a pair of jaws for compressing or crushing, optionally the jaws are crimping jaws.

14. The portable electric pressing tool of any of claims 1 to 12 wherein the pair of jaws comprises a pair of cutting jaws.

15. The portable electric pressing tool of any of claims 1 to 12 wherein the jaws are each configured to receive a removable insert for enabling the jaws to implement a crushing operation or a cutting operation depending on the nature of the inserts.
